# EUROPEAN PATENT SPECIFICATION

(11) **EP 4 310 707 B1**
(45) Date of publication and mention of the grant of the patent: **17.12.2025**
(21) Application number: 23186433.1
(22) Date of filing: 19.07.2023
(51) Int. Cl.: G06F 21/54, G06F 21/55, G06F 21/56

(54) **SYSTEM AND METHOD FOR DETECTING MALICIOUS CODE BY AN INTERPRETER IN A COMPUTING DEVICE**
SYSTEM UND VERFAHREN ZUR ERKENNUNG VON BÖSARTIGEM CODE DURCH EINEN INTERPRETER IN EINER DATENVERARBEITUNGSVORRICHTUNG
SYSTÈME ET PROCÉDÉ DE DÉTECTION DE CODE MALVEILLANT PAR UN INTERPRÉTEUR DANS UN DISPOSITIF INFORMATIQUE

(30) Priority: 19.07.2022 US 202263390405 P
(43) Date of publication of application: 24.01.2024
(73) Proprietor: Morphisec Information Security 2014 Ltd., 8470912 Beer-Sheva (IL)
(72) Inventor: HALBERSTAM LANDAU, Bracha, 9044818 Efrat (IL); KOPYLENKO, Denis, 6687145 Tel Aviv (IL); FOURMAN, Roman, 8617115 Dimona (IL); WACHTFOGEL, Avi, 7193500 Dolev Doar Na Modiin (IL); GIVOL, Nir, 4664469 Hertzeliya (IL); TSECHANSKI, Nathaniel, Cambridge, 02141 (US)
(74) Representative: Marks & Clerk LLP

(56) References cited:
- US-A1- 2017 264 623
- US-B1- 10 033 747
- DAVIDSSON NICOLAI ET AL: "Towards Automated Application-Specific Software Stacks", 15 September 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 88 - 109, ISBN: 978-3-319-10403-4, XP047521429

## Description

### FIELD OF THE INVENTION

Embodiments described herein generally relate to detecting and/or neutralizing malicious code or other security threats on computer systems.

### BACKGROUND

Code injection vulnerabilities arise when an application incorporates user-controllable data into a string that is dynamically evaluated by a code interpreter. If the user data is not strictly validated, an attacker can use crafted input to modify the code to be executed and inject arbitrary code that will be executed by a user's machine. Such code injection vulnerabilities are very serious and often lead to a complete compromise of the application's data and functionality, as well as the machine executing the application. Malicious code may also include a malware that a user has unknowingly executed on their machine. US10033747 B1 describes a computerized method for detecting exploit attacks on an interpreter comprising configuring a virtual machine including a user mode and a kernel mode and processing an object by an application operating in the user mode of the virtual machine. Responsive to the processing of the object, a loading of an interpreter is detected. Furthermore, responsive to the loading of the interpreter, one or more intercept points are inserted for detecting one or more types of software calls from the interpreter or for detecting a certain type or certain types of activities occurring within the interpreter. Thereafter, an exploit attack is detected as being conducted by the object in response to the interpreter invoking a software call that corresponds to the one or more types of software calls that is considered anomalous when invoked by the interpreter or an anomalous activity being conducted within the interpreter. US2017/264623 A1 describes a computer system comprising one or more processors; a digital electronic memory storing a set of program instructions which when executed using the one or more processors cause the one or more processors to: process a first set of original instructions that produce a first set of outputs or effects; generate a first set of interpreter instructions that define a first interpreter; generate a first set of alternate instructions from the first set of original instructions, wherein the first set of alternate instructions is functionally equivalent to the first set of original instructions when the first set of alternate instructions is executed by the first interpreter; send, to the first client computer, the first set of alternate instructions and the first set of interpreter instructions. DAVIDSSON NICOLAI ET AL: "Towards Automated Application-Specific Software Stacks", 15 September 2019 (2019-09-15), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 88 - 109, ISBN: 978-3-319-10403-4, describes an application-specific software stack tailored to a Wordpress installation (customized PHP interpreter, libc tailored to web server and interpreter).

### SUMMARY

Embodiments of methods, systems, and apparatuses are described for detecting and/or neutralizing malicious code or other security threats on computer systems, substantially as shown in and/or described herein in connection with at least one of the figures, as set forth more completely in the claims. The invention is defined by the appended independent claims. Preferred embodiments are set out in the dependent claims.

According to embodiments of the invention, a computer-based system and method for detecting malicious code by an interpreter in a computing device, may include: modifying a translation table referencing an original function name or bytecode of the interpreter to reference a corresponding modified function name or bytecode; determining that a program or script to be executed by the interpreter references the original function name or bytecode; and modifying the program or script to reference the corresponding modified function name or bytecode.

Embodiments of the invention may include determining that the program or script to be executed by the interpreter references the function name or bytecode is performed upon loading of the program or script.

According to embodiments of the invention, modifying the program or script may include: parsing the program or script to locate the function name or bytecode; and replacing the function name or bytecode within the program or script with the corresponding modified function name or bytecode.

Embodiments of the invention may include determining that the interpreter is executed, where modifying the translation table may be performed upon determining that the interpreter is executed.

According to embodiments of the invention, determining that the interpreter is executed may include: obtaining a notification from an operating system that a file was opened with the intent to be executed; obtaining characteristics of the file; and analyzing the characteristics of the file to determine whether the file is the interpreter.

Embodiments of the invention may include intercepting the execution of the interpreter by performing at least one of: kernel hooking of commands indicative of a binary image of the interpreter being loaded into memory and being executed; detecting file access events to files related to the interpreter on the storage device; and detecting loading of libraries related to the interpreter, wherein modifying the translation table is performed upon intercepting (e.g. in reaction to or triggered by intercepting; immediately or soon after intercepting, etc.) the interpreter.

According to embodiments of the invention, modifying the translation table may include: locating the translation table in the executable code of the interpreter binary image or mapped binary image.

According to embodiments of the invention, locating the translation table may include: performing a lookup of known function names in the interpreter binary image or the mapped binary image; obtaining addresses corresponding to a relative positions of the known functions name in interpreter binary image or mapped binary image; obtaining relative positions of the references to the function names; sorting the relative positions; calculating a gap between each two consecutive sorted positions; finding a set of positions that has uniform gaps; and determining that the translation table is found in the set of positions that has uniform gaps.

Embodiments of the invention may include trapping calls to the original function name or bytecode, where trapping the calls to the original function name or bytecode may include mapping the original function name or bytecode to a trapping routine that is configured to log the call.

Embodiments of the invention may include, in response to trapping the calls, performing at least one of: providing a notification to a user; terminating the interpreter; terminating the program or script; and providing a notification to a remote server.

According to embodiments of the invention, modifying a translation table may include selecting the modified function name or bytecode randomly.

According to embodiments of the invention, a computer-based system and method for detecting malicious code by an interpreter in a computing device, may include: modifying a translation table referencing an original function name or bytecode of the interpreter to reference a corresponding modified function name or bytecode; evaluating a program or script to determine if the program or script qualify for runtime morphing; executing the program or script by the interpreter; determining, during execution, that the program or script references the original function name or bytecode; and modifying the program or script to reference the corresponding modified function name or bytecode if the program or script qualify for runtime morphing, and not modifying the program or script otherwise.

### BRIEF DESCRIPTION OF THE DRAWINGS

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1A depicts an interpreter in accordance with an embodiment.
FIG. 1B depicts components of a computer system in accordance with an embodiment.
FIG. 2A depicts a translation table in accordance with an example embodiment.
FIGS. 2B-2D depict various tables utilized to generate a morphed translation table in accordance with an example embodiment.
FIG. 2E depicts a morphed translation table in accordance with an example embodiment.
FIG. 2F depicts a morphed translation table that also includes references to trap functions in accordance with an example embodiment.
FIG. 3 depicts a flowchart of an example method in a computing device for protecting a computer system from malicious scripts/commands/files/programs, according to an example embodiment.
FIG. 4 depicts a block diagram of a computer system that may be configured to perform techniques disclosed herein.
FIG. 5 is a flowchart of a method for detecting malicious code by an interpreter in a computing device, according to embodiments of the invention.
FIG. 6, which is a flowchart of a method for detecting malicious code by an interpreter using runtime morphing in a computing device, according to embodiments of the invention.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the art to implement such feature, structure, or characteristic in connection with other embodiments whether or not explicitly described.

Numerous exemplary embodiments are now described. Any section/subsection headings provided herein are not intended to be limiting. Embodiments are described throughout this document, and any type of embodiment may be included under any section/subsection. Furthermore, it is contemplated that the disclosed embodiments may be combined with each other in any manner.

State of the art cyber attack patterns may be based on vulnerabilities found in various legitimate programs, where, the malicious code (or "payload") may be embedded within the legitimate code, often times, in an encrypted and/or compressed form. Thus, it may be difficult or impossible for current malware-detection tools to detect such attacks. The exploit, either local or remote, may happen when the vulnerable program tries to process a chunk of malformed input. In this case, when the primary malicious code takes control of the running process, it may choose to download secondary payload from the network. In both the local and the remote vulnerability-based attacks, the malicious code running within the originally breached process may proceed by injecting code into the running processes of other programs.

One of the challenges of endpoint detection and response (EDR) solutions to identify command execution attacks, which are injected commands that are evaluated by the interpreter, is the need to interpret and work on the language level which means they need to develop a dedicated mechanism. Protective techniques such as Address Space Layout Randomization (ASLR) and Data Execution Prevention (DEP) are used in modern computerized systems to prevent malicious-code attacks. However, recent sophisticated attacks, such as attacks that are able to deduce the location of desired functionality based on relative addressing, have demonstrated the limitations of ASLR and DEP. In addition, ASLR and DEP may only relate to or protect against in-memory exploits or in-memory code injection attacks. However, ASLR and DEP may not detect command execution attacks, and therefore may not protect against this type of attacks.

Various approaches are described herein for, among other things, neutralizing and/or detecting attacks by malicious code, e.g. code designed to disrupt or perform actions undesirable to the entity controlling the executing system, malware, a computer worm or virus, etc. This may be achieved, for example, by modifying (or "morphing") certain aspects of translation tables utilized by an interpreter. Translation table(s) may be morphed, for example, by modifying function names and/or bytecode instructions included therein, e.g., to modified corresponding function names and/or bytecodes. In some embodiments, the modified function names and/or bytecodes may be selected randomly. Programs and/or scripts to be executed by the interpreter may also be patched to reference the modified function names and/or bytecode instructions, thereby enabling such programs and/or scripts to successfully call the modified function names (whereas malicious code continues to call the original function names). Calls to unmodified/unrecognized functions and/or bytecode instructions performed by the program or script may be trapped and logged (e.g., stored, or have metadata describing the call stored) for further analysis to check for malicious activity.

In particular, embodiments for a method in a computing device are described herein. An embodiment may include modifying a translation table of the interpreter to reference at least one of randomized function names or bytecodes; determining that a program or script to be executed by the interpreter references function names or bytecodes in the translation table; and modifying the program or script to reference the randomized function names or bytecodes.

Thus, embodiments of the invention may improve the technology of cyber security, and in particular, the field of malicious code detection for applications executed by interpreters. Embodiments of the invention may improve the technology of cyber security by enabling a processor that executes a code using an interpreter to detect and trap malicious code during runtime. Specifically, embodiments of the invention may enable detecting attacks that would otherwise be undetected by prior art malware-detection tools such as command execution attacks.

Methods and systems in accordance with any of the embodiments described herein are also described herein.

A computer-readable storage medium in accordance with any of the embodiments described herein is also described herein.

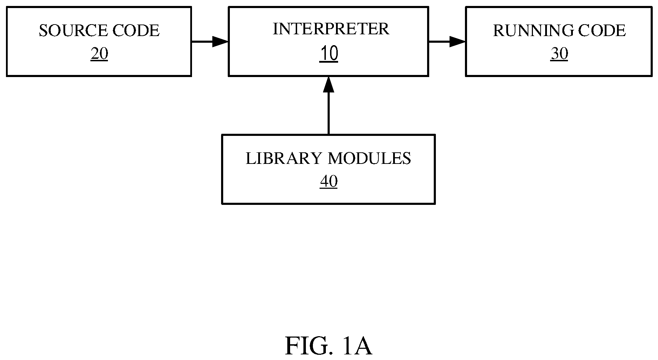

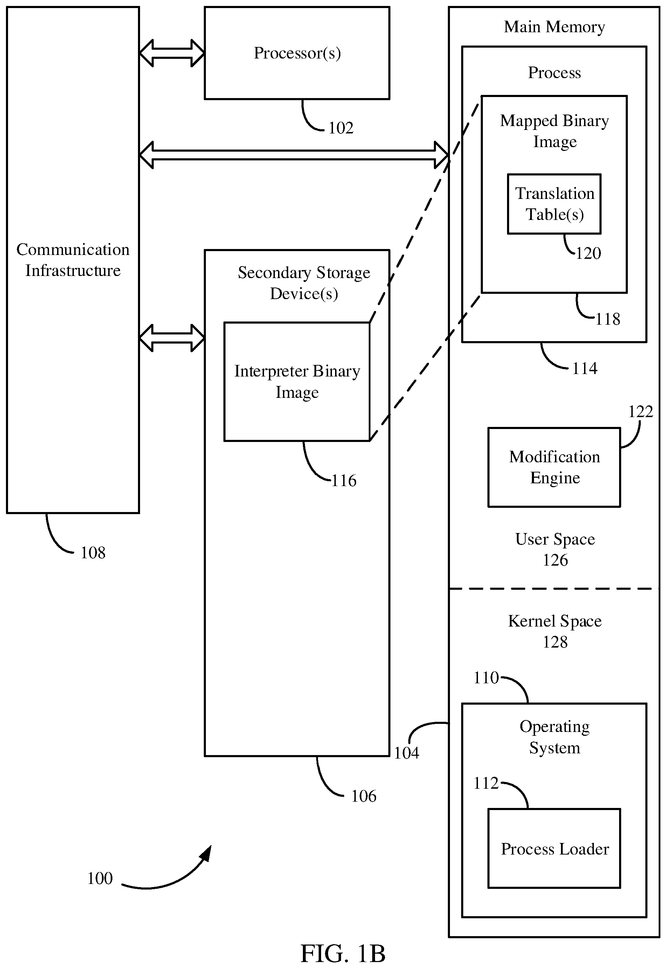

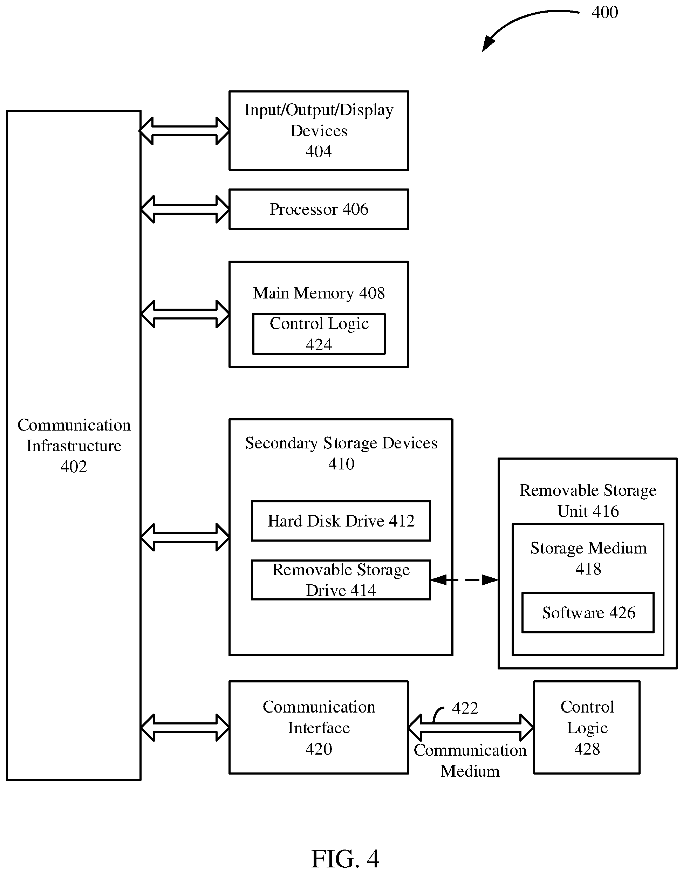

FIG. 1A depicts an interpreter 10 in accordance with an embodiment. interpreter 10 may obtain source code 20 written in a computer language that interpreter 10 is configured to interpret. Such known languages may include Phyton, Javascript, etc. Interpreter 10 may be configured to convert high-level program statements into running code 30, which is machine code executable by processor (e.g., processor 102 depicted in Fig. 1B and/or processor 406 depicted in Fig. 4). The high-level program statements may include source code, pre-compiled code, scripts, etc. Interpreter 10 may convert code into machine code when the program is run, as opposed compilers that may convert the code into machine code before the program run. Interpreter 10 may use library modules 40 to perform the conversion. According to embodiments of the invention, interpreter 10 and library modules 40 may be morphed as disclosed herein. Interpreter 10 as well as other units of Fig. 1 may be executed by computer system 100 presented in Fig. 1B and/or by computer 400 shown in FIG. 4.

FIG. 1B depicts components of a computer system 100 in accordance with one embodiment that detects and/or neutralizes the execution of malicious code associated with a computing process executing thereon. As shown in FIG. 1B, computer system 100 includes one or more processor(s) 102 (also called central processing units, or CPUs), a primary or main memory 104, and one or more secondary storage device(s) 106. Processor(s) 102, main memory 104, and secondary storage device(s) 106 are connected to a communication interface 108 via a suitable interface, such as one or more communication buses. In some embodiments, processor(s) 102 can simultaneously operate multiple computing threads, and in some embodiments, processor(s) 102 may each include one or more processor core(s). Examples of main memory 104 include a random access memory (RAM) (e.g., dynamic RAM (DRAM), synchronous DRAM (SDRAM), dual-data rate RAM (DDRRAM), etc.). Secondary storage device(s) 106 include for example, one or more hard disk drives, one or more memory cards, one or more memory sticks, a floppy disk, magnetic tape, compact disk, DVD, optical storage disk, or any other computer data storage device.

As shown in FIG. 1B, main memory 104 may be segmented into one or more regions or spaces. In particular, main memory 104 may be segmented into a user space 126 and a kernel space 128. Kernel space 128 may be reserved for running and storing an operating system 110, its kernel and kernel extensions, device drivers, etc. User space 126 may be configured to store and run application processes (e.g., process 114). Operating system 110 may be a Linux-based operating system, although the embodiments described herein are not so limited. Examples of Linux-based operating systems include, but are not limited, Ubuntu, Debian, Fedora, CentOS, Red Hat Enterprise Linux, Android (and its variants), etc.

Accordingly, operating system 110 is shown as being stored in kernel space 128. Operating system 110 may manage one or more hardware components (e.g., processor(s) 102, main memory 104. secondary storage device(s) 106, etc.) and software executing on computer system 100. Example hardware components of computer system 100 are described in detail below in reference to FIG. 4. Computer system 100 may be any type of processing device comprising operating system 110, including a desktop computer, a server, a mobile device (e.g., a tablet, a personal data assistant (PDA), a smart phone, a laptop, etc.), an IoT device, etc. It is noted that while operating system 110 is shown as residing in kernel space 128, certain components (e.g., user-mode drivers) may reside in user space 126.

Operating system 110 may have one or more components that perform certain tasks relating to the execution of software on computer system 100. One such component is process loader 112. Process loader 112 is configured to initiate creation of a computing process (or "process") 114 in main memory 104 and store process 114 in user space 126 of main memory 104. Process 114 is an instance of a computer program being executed by processor(s) 102. In accordance with embodiments described herein, the computer program is an interpreter 10 that directly executes commands, scripts, and/or programs written using one of many high-level programming languages, without requiring the commands, scripts, and/or programs to be previously compiled into a machine language program. Interpreter 10 may transform the high-level program into an intermediate language that it then executes, or it may parse the high-level source code and perform the commands directly, which is done line-by-line or statement-by-statement. Interpreter 10 is embodied in instructions and/or data included in a binary image (e.g., interpreter binary image 116). Interpreter binary image 116 may be formatted in accordance with an executable and linkable format (also known as the ELF format) or any other executable format. Examples of interpreters include, but are not limited to, a Python interpreter, a PHP interpreter, an SQL interpreter, a Java interpreter, etc.

The commands that are executed by an interpreter 10 may be included in programs and/or scripts written by a software developer, entered directly as commands via a user interface provided by interpreter 10, or may be constructed dynamically based on input from a user or other external source. The commands may be in a textual code format, or alternatively, may be in a compiled bytecode format.

To initiate creation of process 114, process loader 112 loads (or "maps") binary image 116, which is stored in secondary storage device(s) 106, into an address space allocated for process 114 in main memory 104 based on information included in binary image 116. The binary image mapped into main memory 104 is represented in FIG. 1B by mapped binary image 118. Process loader 112 builds up an initial execution context of process 114. Computer program execution (e.g., process 114) begins when processor(s) 102 commence executing the first instruction of the computer program. Process 114 may include one or more threads of execution that execute a subset of instructions concurrently.

As the program execution evolves, other component(s) of operating system 110 allocate various resources to process 114. The execution context of process 114 may include information about such resource allocation, a current state of the program execution, an instruction that is to be executed next, and other information related to the program execution. The computer program execution continues until processor(s) 102 execute a termination or halt instruction.

Interpreter 10 may also include one or more translation tables 120. Such translation table(s) 120 may also be loaded into memory allocated for process 114. Translation table(s) 120 may map the high-level language commands of the programs and/or scripts executable by interpreter 10 into the methods (or functions) of the interpreter 10. Interpreter 10 may read commands from a high-level script or program, look up the functions in translation table(s) 120 that corresponds to the commands, and execute the relevant functions (as specified by translation table(s) 120) for each of the commands. Accordingly, translation table(s) 120 may include a list of function names of functions (or references thereto) that may be called by interpreter 10 (such functions may also be referred to as built-in functions). Translation table(s) 120 may also include corresponding references (e.g., pointers) to code segments that are to be invoked by interpreter 10 to handle the corresponding functions. One or more functions may be interpreter 10 bytecode instructions. A bytecode may include code that interpreter 10 may convert (e.g., using the translation table) into binary machine code executable by processor 102. The translation table may relate the bytecode to the binary machine code by associating each bytecode with a pointer to the location where the binary machine code resides. One or more of translation table(s) 120 may contain pointers to function names or bytecodes rather than the actual function names. Examples of Python interpreter functions include, but are not limited to access(), ttyname(), chdir(), chflags(), chmod(), fchmod(), chown(), lchmod(), fchown(), Ichflags(), lchown(), chroot(), ctermid(), etc.

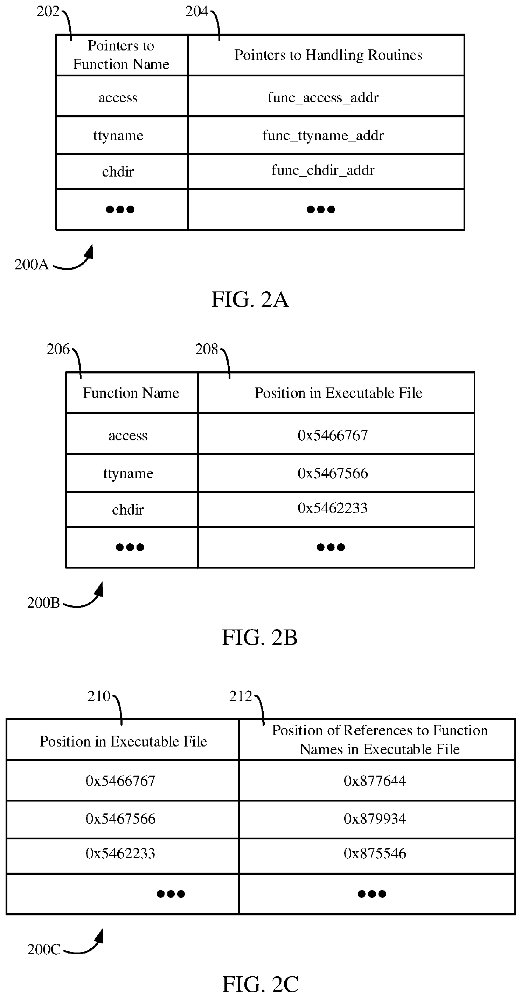

FIG. 2A depicts an example translation table 200A in accordance with an example embodiment. Translation table 200A is an example of translation table(s) 120, as shown in FIG. 1B. As shown in FIG. 2A, translation table 200A may include a first column 202 and a second column 204. First column 202 may include pointers to function names. For example, in native machine code, strings (which may represent function names) are referenced in code by pointers to the actual locations where the strings reside. First column 202 may, additionally or alternatively, include the function names themselves, bytecodes, or pointers to bytecodes (e.g., pointers to the actual locations where the bytecode resides). Second column 204 may contain pointers to corresponding handling routines inside interpreter binary image 116 and/or mapped binary image 114.

Malicious scripts/commands/files/programs (e.g., comprising a malicious executable payload) attempt to access such functions to carry out various exploits. To prevent the malicious executable payload from executing properly, embodiments described herein modify (or "morph") certain aspects of translation table(s) 120 during run time. For example, as shown in FIG. 1B, system 100 may include a modification engine 122, which executes in main memory 104. Modification engine 122 may be configured to be automatically executed at the startup of system 100. This way, modification engine 122 performs the operations described herein to prevent exploits as soon as possible (e.g., before malicious code has the opportunity to be executed). It is noted that modification engine 122 may be also configured to execute on-demand, for example, may be launched by the user.

Modification engine 122 may be configured to detect, determine or be notified that an interpreter 10 is being executed by processor 120 in any applicable manner. For example, upon execution, modification engine 122 may be configured to register with operating system 110 to receive notification of filesystem events. Examples of such events include, but are not limited to, the opening of files, the reading of files, the writing of files, and the closing of files. In an embodiment in which operating system 110 is a Linux-based operating system, modification engine 122 may register with operating system 110 utilizing the fa_notify application programming interface (API). In accordance with such an embodiment, modification engine 122 may issue a fa_notify API call, which may create hooks that may allow modification engine 122 to receive notifications from operating system 110 of filesystem events.

When an executable is executed on system 100 (e.g., any executable on system 110), operating system 110 notifies modification engine 122 that a file was opened with the intent to be executed via the hooks, e.g., that the file is an executable. Operating system 110 may also notify modification engine 122 of various characteristics of the executable, including, but not limited to, a unique identifier of the filesystem, a file handle associated with the executable (e.g., that identifies the name of the executable), etc. Modification engine 122 may be configured to analyze such characteristics to determine whether the executable is an interpreter 10.

Responsive to determining that the executable is an interpreter 10, or to being notified that an interpreter 10 is being executed, modification engine 122 may modify the translation table(s) of interpreter 10. For example, modification engine 122 may first locate translation table(s) 120, for example, in the executable code of interpreter binary image 116 and/or mapped binary image 114. In some embodiments, modification engine 122 may be informed of the location of interpreter binary image 116, e.g., by the OS or by auxiliary data of the interpreter, or the modification engine 122 may infer the location of modification engine 122. For example, the location of translation table(s) 120 may be in a known offset within the code of the interpreter that may be known a priori to modification engine 122. For example, modification engine 122 may get the name or type of the interpreter from the interpreter parameters such as the file name of the interpreter, and may know a priori the offset of the translation table of that type or name of interpreter. In some embodiments, modification engine 122 may search for translation table(s) 120. For example, to locate translation table(s) 120, modification engine 122 may perform a lookup of known function names or bytecodes (e.g., strings) in interpreter binary image 116 and/or mapped binary image 114. At this state, all the string representations of the functions or bytecodes are searched for inside the executable code of interpreter binary image 116 and/or mapped binary image 114. The result of this lookup may be a data structure, such as a table 200B, as shown in FIG. 2B.

As shown in FIG. 2B, table 200B may include a first column 206 and a second column 208. First column 206 may include function names (or string representations thereof). Second column 208 may include addresses corresponding to the relative positions of a corresponding function name in interpreter binary image 116 and/or mapped binary image 114.

In cases where translation table(s) 120 include pointers to function names or bytecodes rather than the actual function names or bytecodes, an intermediate stage may be added after finding the known function names or bytecodes in which the pointers to the known function names or bytecodes may be searched for. In this case, first column 206 may include the pointers to the function names or bytecodes.

After locating the function names or the pointers to the function names, modification engine 122 may search for all appearances of the relative positions of the function names or the pointers to the function names from table 200B and generate another data structure, such as a table, which is composed of the relative positions of the references to the function names described above. These are the positions where the references of the function names are used throughout interpreter binary image 116 and/or mapped binary image 114.

For example, FIG. 2C depicts an example table 200C in accordance with an example embodiment. As shown in FIG. 2C, table 200C may include a first column 210 and a second column 212. First column 210 may include addresses corresponding to the relative positions of a corresponding function in interpreter binary image 116 and/or mapped binary image 114 (e.g., first column 210 corresponds to second column 208 of FIG. 2B). Second column 212 may contain positions (e.g., addresses) where the references of the function names are used throughout interpreter binary image 116 and/or mapped binary image 114.

Modification engine 122 may then sort table 200C by the positions, e.g., in ascending order. That is, table 200C may be sorted such that second column 212 lists the positions in ascending order. Modification engine 122 may then calculate a gap between each two consecutive positions (e.g., the difference between consecutively-listed addresses in sorted second column 212. Modification engine 122 may then find a set of positions in table 200C that has uniform gaps (e.g., differences). In an embodiment in which system 100 is a Linux x86/64-based system, these gaps are usually 32 bytes for Python interpreter executables. It is noted that the uniform gaps may vary depending on the system and the interpreter. The location of such gaps in interpreter binary image 116 and/or mapped binary image 114 generally designates that translation table 120 is found in the data segment of interpreter binary image 116 and/or mapped binary image 114. Other methods may be used to locate the translation tables.

After locating translation table(s) 120, modification engine 122 may modify (e.g., morph) translation table(s) 120. For example, modification engine 122 may modify, replace or change one or more function names within translation table(s) 120 (or pointed by translation table) in mapped binary image 120 in memory 104, e.g., by applying a modification function based on a known random value to the function names. Simply stated, modification engine 122 may randomize at least a portion of the function names. For instance, modification engine 122 may generate a data structure, such as a table, that may include strings matching the newly-generated function names. The data structure may be allocated in the memory space allocated for process 114.

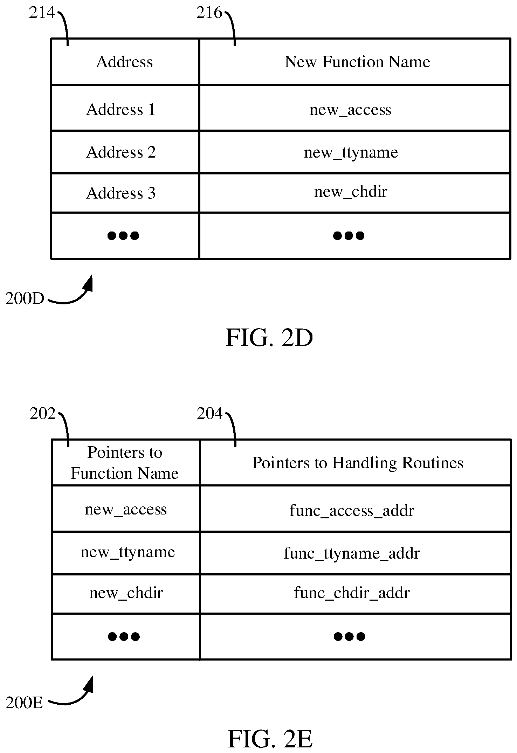

For example, FIG. 2D depicts a table 200D that may include the newly-generated function names. As shown in FIG. 2D, table 200D may include a first column 214 and a second column 216. First column 214 may include addresses at which the newly-generated function names may be referenced. Second column 216 may include the newly-generated function names. It is noted that the prefix "new_" is merely used to represent a newly-generated function name and that function names may be modified in various ways.

Modification engine 120 may locate translation table(s) 120 in memory 104 and update the found translation table(s) 120 with the addresses of the function names from table 200D. This effectively transform translation table(s) 120 to reference the new function names, as shown in FIG. 2E. In FIG. 2E, table 200E represents a morphed version of table 200A.

It is noted that modification engine 122 may cause interpreter 10 to be suspended before modifying translation table(s) 120 and then cause interpreter 10 to resume execution after modifying translation table(s) 120.

It is noted that translation table(s) 120 may include bytecode instructions, where each instruction maps to an operation that is to be performed by a command, script and/or program executed by the interpreter. In such a scenario, modification engine 120 may morph the bytecode instructions (e.g., modification engine 120 may randomize, or otherwise modify, the byte code instructions).

After the interpreter's 10 translation table(s) 120 are morphed, modification engine 122 may patch applications, scripts and/or programs to be executed by interpreter 10 to reference the morphed translation table(s). For instance, upon loading an application script or program, e.g., when a file is read into memory 104 (e.g., any file that is read into memory 104), operating system 110 may notify modification engine 122 that the file (e.g., an application, script or program) was read into memory 104 via the hooks. Operating system 110 may also notify modification engine 122 of various characteristics of the file read into memory 104, including, but not limited to, a unique identifier of the filesystem, a file handle associated with the executable (e.g., that identifies the name of the executable), etc. Modification engine 122 may be configured to analyze such characteristics to determine whether the file is an application, a program or a script that is to be executed by interpreter 10.

Responsive to determining that the file is an application, a program or a script to be executed by interpreter 10, modification engine 122 may be configured to dissect or disassemble the program or script during online or offline time frames and parse the program or script to locate function names (or bytecode instructions) referenced thereby. If any of the function names and/or bytecode instructions correspond to the original function names and/or bytecode instructions, modification engine 122 may apply the same modification function utilized to morph translation table(s) 120 based to the function names and/or bytecode within the file. That is, modification engine 122 may change or morph the function names and/or bytecode within the file in the same manner as the function names and/or bytecode were morphed in translation table(s) 120. Thus, modification engine 122 may replace the function names and/or bytecodes within the file with the corresponding randomized function names or bytecodes. It is noted that modification engine 122 may cause interpreter 10 to be suspended before patching the program or script and then cause interpreter 10 to resume execution after patching the program or script.

According to some embodiments, a program or a script to be executed by interpreter 10 may be morphed upon loading. That is, when loading an application, a program or a script to be executed by interpreter 10, the application, program or script may be morphed, e.g., by modification engine 122, function names and/or bytecodes within the file may be changed or morphed in the same manner as the function names and/or bytecodes were morphed in translation table(s) 120, e.g., the application, program or script may be patched as part of the loading process.

According to some embodiments, certain programs or scripts executed by interpreter 10 may be morphed during runtime, e.g., when executed. To be qualified for runtime morphing or runtime patching, a program or a script should be allow listed, e.g., approved by the OS. modification engine 122 or by other trusted entity as legitimate application. In some embodiments, modification engine 122 may evaluate the program or a script to determine if the program or script qualify for runtime morphing according to certain criteria or rules. For example, to evaluate the program or script, modification engine 122 may scan (or initiate another program to scan) the program or a script code for malware before allowing runtime morphing. The criteria or rules may relate to static and/or dynamic parameters of the program or a script. For example, the criteria or rules may include the path or location of the program or script on the disk, e.g., programs or scripts located in trusted directories may be allowed or qualified for runtime morphing, while programs or scripts located in other directories may not be qualified for runtime morphing. Additional or other rules may relate to the entropy of the file name including the program or script or the entropy of the file content. For example, the entropy of the file name may be tested against a threshold, and if the entropy exceeds (e.g., higher than) the threshold it may be assumed that the file name is random and that the program or script may be malicious. If the entropy of the file name does not exceed the threshold it may be assumed that the file name is legitimate and that the program or script may be legitimate as well. Similarly, high entropy (e.g., entropy above a threshold) of the code or parts of the code, or variations in the entropy (e.g., entropy variation level above a threshold) of the code of the program or script may be an indication that at least a part of the code is encrypted and/or compressed and may be malicious. Low entropy code and/or code with low variations in entropy may be an indication that the program or script are legitimate. The rules described above may be used alone or in combination and other rules or combination of rules may be used to determine if a program or script are qualified for runtime patching.

Programs or scripts that are qualified for runtime morphing may not be morphed upon loading but rather when executed. Thus, whenever interpreter 10 reads a code line of those programs or scripts, interpreter 10 may parse the line, search for a function name that should be morphed, and call the morphed function name instead of the original function name.

In accordance with an embodiment, modification engine 122 may scan the file (or initiate another program to scan the file) for malware before dissecting or disassembling the file. In the event that malware is discovered, an appropriate mitigation action may be performed with respect to the file, and the file is not patched as described above. It is noted that file(s) may be not patched based on other factors in addition to and/or in lieu of whether such file(s) include malware. For example, file(s) may not be patched based on the location of the file stored in secondary storage device(s) 106 or any other factor that may indicate that such file(s) are suspicious.

According to embodiments of the invention, injected code may not undergo the loading process as described above, and therefore, may not be morphed and may include the original function names and/or bytecode. Thus, when executed, the original function names pre-modification may be called by the injected code. Calls to unmodified/unrecognized function names (e.g., the original function names pre-modification) performed by the program or script (e.g., functions that were not included in translation table(s) 120) may be trapped and logged for further analysis to check for malicious activity. That is, malicious scripts/commands/files/programs may continue to reference the unmodified functions.

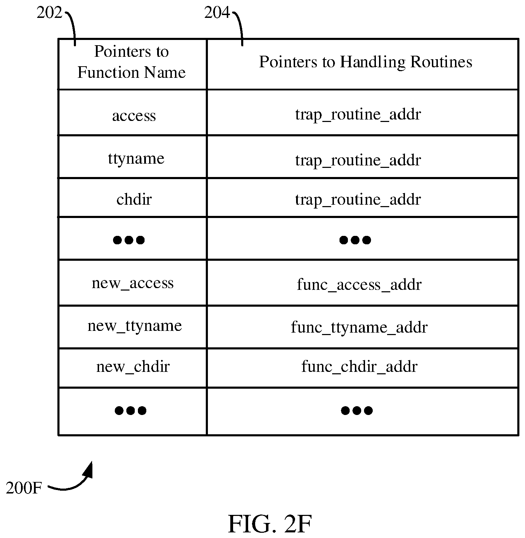

In accordance with an embodiment, to trap malicious scripts/commands/files/programs, the original translation table inside interpreter 10 may be extended (or replaced by a new table) to contain the old (e.g., original) function names and the new (morphed) function names together. The morphed function names (which would be called by a patched program or script) are mapped to the original functions, and thus, when called, perform the functionality originally intended by the functions. The original function names (which would be called by malicious scripts/commands/files/programs) are mapped to special trapping routines which, when called, for example, may log the call, e.g., which may be an attack, and then crash interpreter 10, or log the call and then continue to the original call implementation (if blocking the attack is not desired). The call log may be further analyzed as required. An example of such a table is shown in FIG. 2F. The original functions as well as the special trapping routines may be stored in libraries 40, which may be morphed to include the special trapping routines.

According to some embodiments, the original translation table may be replaced to contain only the new (e.g., morphed) function names (as shown in FIG. 2E), which would point to the original methods, and in addition, override, hook, or replace the interpreter's exception handler with a new handler. The new handler would document the attack and then either crash interpreter 10 to block it from further executing, or continue to the original implementation method of the corresponding function name (e.g., according to a particular policy). The original exception handler may be overridden from within the interpreter script, or inside the interpreter executable itself, or in any other way.

Modification engine 122 may provide a notification to a user of a potential attack and/or suspend and/or terminate interpreter 10, e.g., stop the execution of interpreter 10, and/or terminate the program or script being executed by interpreter 10, e.g., stop the execution of the program or script. Modification engine 122 may also provide a notification to a remote computing device (e.g., a server). The notification may include the file and/or various characteristics of the file and/or the function call. The remote computing device may analyze the file and/or characteristics for malicious activity. Examples of the characteristics include, but are not limited to, an identifier of the program or script (e.g., process ID), a timestamp at which the unmodified/unrecognized function is called and/or executed, other processes that are related to the program or script process (e.g., a father process, a sibling process, etc.), etc.

It is noted that the trapping and detection techniques described above are purely exemplary and that other techniques may be utilized to trap and/or detect malicious scripts/commands/files/programs.

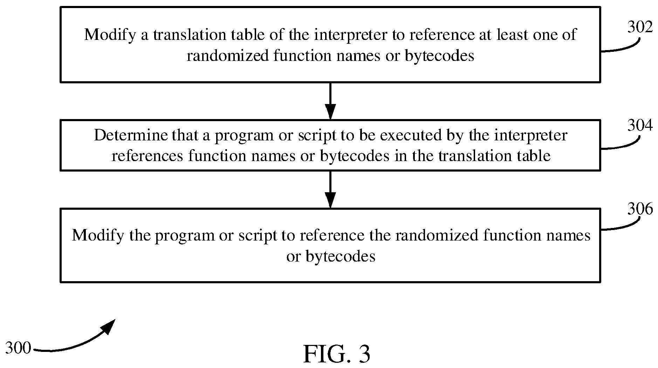

Accordingly, a computer system may be protected from malicious scripts/commands/files/programs in many ways. For example, FIG. 3 depicts a flowchart 300 of an example method in a computing device for protecting a computer system from malicious scripts/commands/files/programs, according to an example embodiment. Modification engine 122 may operate according to flowchart 300. For illustrative purposes, flowchart 300 is described with continued reference to FIG. 1B. Flowchart 300 and modification engine 122 are described as follows. While in some embodiments the operations of Fig. 3 are carried out using systems as shown in Figs. 1 and 4, in other embodiments other systems and equipment can be used.

At step 302, a translation table of interpreter 10 may be modified to reference at least one of randomized function names or bytecodes. For example, with reference to FIG. 1B, modification engine 122 modifies translation table(s) 120 of interpreter 10 to reference at least one of randomized function names or bytecodes.

At step 304, a determination may be made that a program or script to be executed by interpreter 10 references function names or bytes in the translation table. For example, with reference to FIG. 1B, modification engine 122 determines that a program or script to be executed by interpreter 10 references function names or bytes in the translation table.

At step 306, the program or script may be modified to reference the randomized function names or bytecodes. For example, with reference to FIG. 1B, modification engine 122 modifies the program or script to reference the randomized function names or bytecodes. As disclosed herein, in some embodiments operations 304 and 306 are performed upon loading the program or script, and in some embodiments operations 304 and 306 are performed during runtime.

It is noted that while the embodiments described above are directed to patching techniques that may be performed in user space (e.g., user space 126), the embodiments described herein are not so limited. For instance, in accordance with an embodiment, the interpreter executable (e.g., interpreter binary image 116) may be patched on disk (e.g., secondary storage device(s) 106), as well as the programs and/or scripts executable by the interpreter. This may be performed by searching the relevant system storage volumes for the interpreter executable files and patching them all on the disk.

In accordance with another embodiment, the interpreter executable inside an operating system image may be patched prior to its installation (instantiation) on system 100. This may involve locating all of the interpreter executables inside the operating system image prior to its installation and patching them. The patching may be done on an executable file format that is in use by the operating system (e.g., elf, coff, a.out, etc.). The foregoing may also be performed with the programs and/or scripts that are executable by the interpreter.

According to some embodiments, interpreter 10 may be intercepted and patched during its execution. The execution of interpreter 10 may be intercepted by one or more of the following techniques: 1) kernel hooking of the execve(), open() or openAt() system calls (or any other call allowing modification engine 122 to receive notifications of interpreter binary image 116 being loaded into memory 104 and being executed); 2) detecting file access events related to or directed to files related to the interpreter on the storage device (e.g., secondary storage device 106), which in many cases may provide an indication that the interpreter is being executed. For example, for Linux operating system (OS), the modification engine 122 may identify that fa_notify or i_notify APIs, as provided via the Linux OS are used in the user space of the OS; 3) by detecting loading of libraries related to the interpreter, e.g., libraries 40, and affecting the loading order of libraries 40 for interpreter 10. For example, when the OS attempts to load libraries 40 related to the interpreter 10, interpreter 10 may be intercepted. The interpreter 10 may be patched by loading the morphed libraries as well, e.g., the libraries that include the morphed function names. For example, a LD_PRELOAD-based mechanism, may allow loading additional custom shared object to selected executed process, for example, execve(), open() or openAt(). This shared object may be crafted to perform the patching on the newly-loaded process after determining that the process is of the interpreter executable.

According to some embodiments, the interpreter may be patched during its execution in memory 104, meaning that an access to another process memory space shall be acquired by modification engine 122. This may be done in user space with the ptrace() Linux service, through the /proc filesystem, or in the kernel space by hooking the execve() system call (as an example).

It is noted that patching in memory 104 may combine several techniques described above. For example, hooking the execve() system call in the kernel may allow the interception of the interpreter execution (catch the exact file name and path to it on the disk), then patching it on the disk. Another way of doing it after the above interception may include allowing the file to be loaded into memory by operating system 110 and then patch it in memory 104.

In accordance with yet a further embodiment, a script may be utilized to morph the translation table of an interpreter. The script may be packaged with the interpreter binary (or may be otherwise obtained) and may be executed by the interpreter itself. During execution, the script may morph the translation table to include the morphed translation tables and/or trap functions as described above.

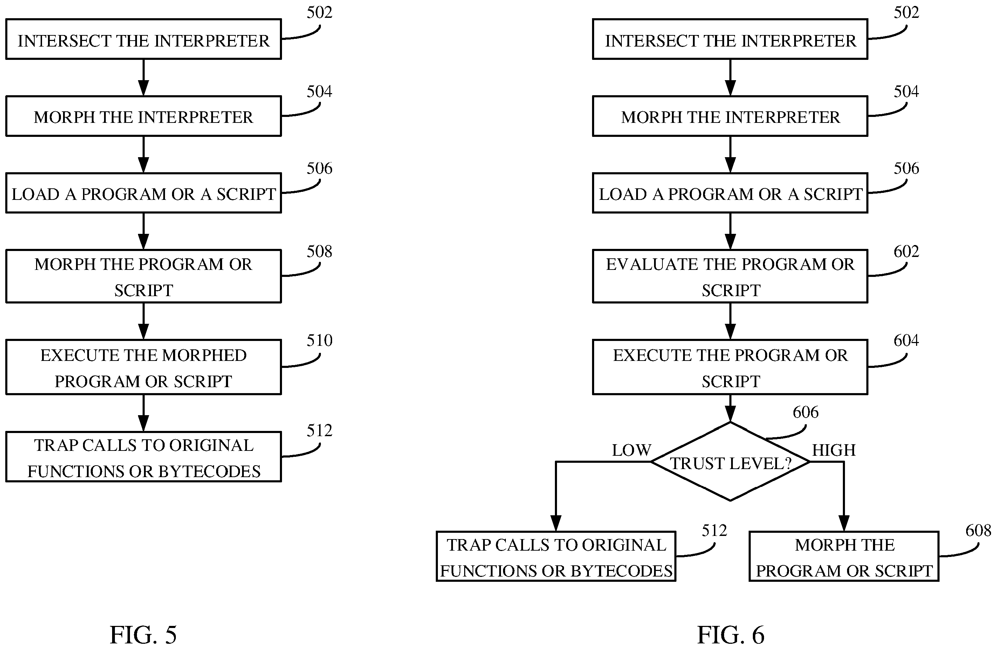

Reference is now made to FIG. 5, which is a flowchart of a method for detecting malicious code by an interpreter in a computing device, according to embodiments of the invention. While in some embodiments the operations of FIG. 5 are carried out using systems as shown in FIGs. 1 and 4, in other embodiments other systems and equipment can be used.

In operation 502, a processor (e.g., processor 102 depicted in Fig. 1B and/or processor 406 depicted in Fig. 4) may intercept an interpreter, e.g., determine or detect that the interpreter is executed by the processor. The interpreter may be intercepted using any applicable method, as disclosed herein. For example, the interpreter may be intercepted by obtaining a notification from an operating system that a file (e.g., an executable) was opened with the intent to be executed, obtaining characteristics of the file and analysing the characteristics of the file to determine whether the file is the interpreter. The characteristics may include, for example, a unique identifier of the filesystem, a file handle associated with the executable (e.g., that identifies the name of the executable), etc. The processor may be configured to analyze such characteristics to determine whether the executable is an interpreter. Additionally or alternatively, the processor may intercept the interpreter by performing at least one of: kernel hooking of commands indicative of a binary image of the interpreter being loaded into memory and being executed, detecting file access events related or directed to files related to the interpreter on the storage device, and detecting loading of libraries related to the interpreter.

In operation 504, upon intercepting or detecting (e.g. in reaction to or triggered by intercepting or detecting; immediately or soon after intercepting or detecting, etc.) the interpreter, the processor may morph the interpreter by modifying one or more translation tables of the interpreter. The processor may locate the translation table using any applicable method, e.g., using a priori knowledge of the offset of the translation tables, or by locating features of the translation table such as function names (or addresses of function names) that are located in the code of the interpreter in constant gaps, as disclosed herein. In some embodiments, the processor may locate the translation tables by obtaining addresses corresponding to a relative positions of the known functions name in interpreter binary image or mapped binary image, obtaining relative positions of the references to the function names, sorting the relative positions, calculating a gap between each two consecutive sorted positions, finding a set of positions that has uniform gaps, and determining that the translation table is found in the set of positions that has uniform gaps. In addition, the processor may morph the interpreter to include trap functions or routines, where calls to the original functions names may be mapped or directed to the trap functions or routines. In some embodiments the trap functions or routines may be configured to log the call and/or crash or halt the interpreter, as required, or to perform any applicable action as disclosed herein. Operations 502 and 504 may be seen as preparation steps that are performed once for each execution of an interpreter.

In operation 506, the processor may load a program or a script to be executed by the interpreter. In operation 508, the processor may patch, e.g., morph, the program or script upon loading (e.g. in reaction to or triggered by loading; immediately or soon after loading, etc.). For example, the processor may determine that a program or script to be executed by the interpreter references the original function name or bytecode, and modify the program or script to reference the corresponding modified function name or bytecode. Modifying the program or script may include parsing the program or script to locate the function name or bytecode, and replacing the function name or bytecode within the program or script with the corresponding modified function name or bytecode.

In operation 510, the processor may execute the morphed program or script. Thus, legitimate calls to functions or bytecodes, e.g., calls where the functions or bytecodes were morphed in operation 508, may access the correct functions or bytecodes. However, illegitimate calls, e.g., calls of injected code that were not morphed in operation 508, will reference the trap functions.

In operation 512, the processor may trap calls to the original functions or bytecodes, e.g., by execution the trap function upon a call to the original function name. Trapping the calls may include logging the call and/or crashing or halting the interpreter, as implemented by the trapping functions or routines.

Reference is now made to FIG. 6, which is a flowchart of a method for detecting malicious code by an interpreter using runtime morphing in a computing device, according to embodiments of the invention. While in some embodiments the operations of FIG. 6 are carried out using systems as shown in FIGs. 1 and 4, in other embodiments other systems and equipment can be used. Some of the operations of embodiments of the method presented in FIG. 6 are similar to operations of embodiments presented in FIG. 5. These operations will be given the same reference numerals and will not be described again.

In operation 602, instead of morphing the program or script upon loading, the program or script may be evaluated, e.g., a trust level may be determined for the program or script. The trust level may be determined based on examining static or dynamic properties of the program or script. For example, the static properties may include the file name and/ or the code of the program or script and the dynamic properties may include the location, directory or path of the program or script on the disk. Alternatively or additionally, the code of the program or script may be scanned for malware. The results of some or all of the evaluations may be unified to a trust level assigned to the program or script, e.g., a trust level may be calculated for the program or script.

In operation 604 the processor may execute the program or script. The processor may further determine, during execution, that the program or script references the original function name or bytecode. In operation 606, the processor may determine whether the program or script qualifies for runtime morphing, e.g., based on the trust level assigned for the program or script. For example, if the trust level is high (e.g., above a threshold), the processor may determine that the program or script qualify for runtime morphing and may move to operation 608. In operation 608, the processor may modify the program or script during runtime to reference the corresponding modified function name or bytecode. If, however, the processor determines in operation 606 that the program or script does not qualify for runtime morphing, e.g., if the trust level not above a threshold, then the processor may not morph the function call and proceed to operation 512. In operation 512 the call may be trapped.

Embodiments of the method presented in Fig. 6 may be combined with embodiments of the method presented in Fig. 5, e.g., morphing of applications may be performed upon loading and during runtime, e.g., for legitimate applications that may handle injected code. For example, in one embodiment, an application may be morphed upon loading, and if allow listed, code downloaded or otherwise obtained by this application during runtime may be morphed during runtime.

The embodiments described herein, including systems, methods/processes, and/or apparatuses, may be implemented using well known processing devices, servers, smart phones, tablets, personal data assistants (PDAs), Internet-of-Things (IoT) devices, computers, etc. Such as a computer 400 shown in FIG. 4. It should be noted that computer 400 may represent computing devices linked to, processing devices, traditional computers, and/or the like in one or more embodiments. For example, computing system 100 of FIG. 1B, and any of the sub-systems, components, and/or models respectively contained therein and/or associated therewith, may be implemented using one or more computers 400.

Computer 400 can be any commercially available and well known communication device, processing device, and/or computer capable of performing the functions described herein, such as devices/computers available from International Business Machines^{®}, Apple^{®}, Sun^{®}, HP^{®}, Dell^{®}, Cray^{®}, Samsung^{®}, Nokia^{®}, etc. Computer 400 may be any type of computer, including a desktop computer, a server, a mobile device (e.g., a tablet, a personal data assistant (PDA), a smart phone, a laptop, etc.), an IoT device, etc.

Computer 400 includes one or more processors (also called central processing units, or CPUs), such as a processor 406. Processor 406 is connected to a communication infrastructure 402, such as a communication bus. In some embodiments, processor 406 can simultaneously operate multiple computing threads, and in some embodiments, processor 406 may include one or more processors.

Computer 400 also includes a primary or main memory 408, such as random access memory (RAM). Main memory 408 has stored therein control logic 424 (computer software), and data.

Computer 400 also includes one or more secondary storage devices 410. Secondary storage devices 410 include, for example, a hard disk drive 412 and/or a removable storage device or drive 414, as well as other types of storage devices, such as memory cards and memory sticks. For instance, computer 400 may include an industry standard interface, such a universal serial bus (USB) interface for interfacing with devices such as a memory stick. Removable storage drive 414 represents a floppy disk drive, a magnetic tape drive, a compact disk drive, an optical storage device, tape backup, etc.

Removable storage drive 414 interacts with a removable storage unit 416. Removable storage unit 416 includes a computer useable or readable storage medium 418 having stored therein computer software 426 (e.g., control logic) and/or data. Removable storage unit 416 represents a floppy disk, magnetic tape, compact disk, DVD, optical storage disk, or any other computer data storage device. Removable storage drive 414 reads from and/or writes to removable storage unit 416 in a well-known manner.

Computer 400 may also include input/output/display devices 404, such as touchscreens, LED and LCD displays, monitors, keyboards, pointing devices, etc.

Computer 400 may include a communication or network interface 420. Communication interface 420 enables computer 400 to communicate with remote devices. For example, communication interface 420 allows computer 400 to communicate over communication networks or mediums 422 (representing a form of a computer useable or readable medium), such as LANs, WANs, the Internet, etc. Network interface 420 may interface with remote sites or networks via wired or wireless connections.

Control logic 428 may be transmitted to and from computer 400 via the communication medium 422.

Any apparatus or manufacture comprising a computer useable or readable medium having control logic (software) stored therein is referred to herein as a computer program product or program storage device. This includes, but is not limited to, computer 400, main memory 408, secondary storage devices 410, and removable storage unit 416. Such computer program products, having control logic stored therein that, when executed by one or more data processing devices, cause such data processing devices to operate as described herein, represent embodiments.

Techniques, including methods, and embodiments described herein may be implemented by hardware (digital and/or analog) or a combination of hardware with one or both of software and/or firmware. Techniques described herein may be implemented by one or more components. Embodiments may include computer program products comprising logic (e.g., in the form of program code or software as well as firmware) stored on any computer useable medium, which may be integrated in or separate from other components. Such program code, when executed by one or more processor circuits, causes a device to operate as described herein. Devices in which embodiments may be implemented may include storage, such as storage drives, memory devices, and further types of physical hardware computer-readable storage media. Examples of such computer-readable storage media include, a hard disk, a removable magnetic disk, a removable optical disk, flash memory cards, digital video disks, random access memories (RAMs), read only memories (ROM), and other types of physical hardware storage media. In greater detail, examples of such computer-readable storage media include, but are not limited to, a hard disk associated with a hard disk drive, a removable magnetic disk, a removable optical disk (e.g., CDROMs, DVDs, etc.), zip disks, tapes, magnetic storage devices, MEMS (micro-electromechanical systems) storage, nanotechnology-based storage devices, flash memory cards, digital video discs, RAM devices, ROM devices, and further types of physical hardware storage media. Such computer-readable storage media may, for example, store computer program logic, e.g., program modules, comprising computer executable instructions that, when executed by one or more processor circuits, provide and/or maintain one or more aspects of functionality described herein with reference to the figures, as well as any and all components, capabilities, and functions therein and/or further embodiments described herein.

Such computer-readable storage media are distinguished from and non-overlapping with propagating signals and communication media (do not include propagating signals and communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media and signals transmitted over wired media. Embodiments are also directed to such communication media.

The techniques and embodiments described herein may be implemented as, or in, various types of devices. For instance, embodiments may be included in mobile devices such as laptop computers, handheld devices such as mobile phones (e.g., cellular and smart phones), handheld computers, and further types of mobile devices, desktop and/or server computers. Devices may include digital circuits, analog circuits, or a combination thereof. Devices may include one or more processor circuits (e.g., central processing units (CPUs) (e.g., processor 406 of FIG. 4), microprocessors, digital signal processors (DSPs), and further types of physical hardware processor circuits) and/or may be implemented with any semiconductor technology in a semiconductor material, including one or more of a Bipolar Junction Transistor (BJT), a heterojunction bipolar transistor (HBT), a metal oxide field effect transistor (MOSFET) device, a metal semiconductor field effect transistor (MESFET) or other transconductor or transistor technology device. Such devices may use the same or alternative configurations other than the configuration illustrated in embodiments presented herein.

### VI. Conclusion

While various embodiments of the present invention have been described above, it should be understood that they have been presented by way of example only, and not limitation. It will be understood by those skilled in the relevant art(s) that various changes in form and details may be made therein without departing from the remit of the invention as defined in the appended claims. Accordingly, the breadth and scope of the present invention should not be limited by any of the above-described exemplary embodiments, but should be defined only in accordance with the following claims.

## Claims

1. A computer-implemented method for detecting malicious code by an interpreter (10) in a computing device, the method comprising:
modifying (302) a translation table (120) referencing an original function name or bytecode of the interpreter to reference a corresponding modified function name or bytecode;
determining (304) that a program or script to be executed by the interpreter references the original function name or bytecode;
modifying (306) the program or script to reference the corresponding modified function name or bytecode;
executing the modified program or script; and
trapping calls to the original function name or bytecode.

2. The method of claim 1, wherein determining that the program or script to be executed by the interpreter (10) references the function name or bytecode is performed upon loading of the program or script.

3. The method of any of the preceding claims, wherein modifying the program or script comprises:
parsing the program or script to locate the function name or bytecode; and
replacing the function name or bytecode within the program or script with the corresponding modified function name or bytecode.

4. The method of any of the preceding claims, comprising determining that the interpreter (10) is executed, wherein modifying the translation table (120) is performed upon determining that the interpreter is executed.

5. The method of claim 4, wherein determining that the interpreter (10) is executed comprises:
obtaining a notification from an operating system (110) that a file was opened with the intent to be executed;
obtaining characteristics of the file; and
analysing the characteristics of the file to determine whether the file is the interpreter.

6. The method of any of claims 1-3, further comprising:
intercepting the execution of the interpreter (10) by performing at least one of:
kernel hooking of commands indicative of a binary image (116) of the interpreter being loaded into memory and being executed;
detecting file access events to files related to the interpreter on the storage device; and
detecting loading of libraries related to the interpreter,
wherein modifying the translation table (120) is performed upon intercepting the interpreter.

7. The method of any of the preceding claims, wherein modifying the translation table (120) comprises:
locating the translation table in the executable code of the interpreter binary image (116) or mapped binary image (118).

8. The method of claim 7, wherein locating the translation table (120) comprises:
performing a lookup of known function names in the interpreter binary image (116) or the mapped binary image (118);
obtaining addresses corresponding to a relative positions of the known functions name in interpreter binary image or mapped binary image;
obtaining relative positions of the references to the function names;
sorting the relative positions;
calculating a gap between each two consecutive sorted positions;
finding a set of positions that has uniform gaps; and
determining that the translation table (120) is found in the set of positions that has uniform gaps.

9. The method of any of the preceding claims, wherein trapping the calls to the original function name or bytecode comprises mapping the original function name or bytecode to a trapping routine that is configured to log the call.

10. The method of claim 9, further comprising, in response to trapping the calls, performing at least one of:
providing a notification to a user;
terminating the interpreter (10);
terminating the program or script; and
providing a notification to a remote server.

11. The method of any of the preceding claims, wherein modifying a translation table comprises selecting the modified function name or bytecode randomly.

12. A computer-implemented method for detecting malicious code by an interpreter (10) in a computing device, the method comprising:
modifying a translation table referencing an original function name or bytecode of the interpreter to reference a corresponding modified function name or bytecode;
evaluating (602) a program or script to determine if the program or script qualify for runtime morphing;
executing (604) the program or script by the interpreter;
determining, during execution, that the program or script references the original function name or bytecode; and
modifying (608) the program or script to reference the corresponding modified function name or bytecode if the program or script qualify for runtime morphing, and not modifying the program or script otherwise.

13. The method of claim 12, further comprising trapping calls to the original function name or bytecode, wherein trapping the calls to the original function name or bytecode comprises mapping the original function name or bytecode to a trapping routine that is configured to log the call.

14. A system for detecting malicious code by an interpreter (10), the system comprising:
a memory (104); and
a processor (102) configured to perform the method of any of the preceding claims.

15. A computer readable medium comprising instructions which when executed on a data-processing system cause the system to implement a method according to any of claims 1-13.

## Patentansprüche

1. Computerimplementiertes Verfahren zum Erkennen von Schadcode durch einen Interpreter (10) in einer Rechenvorrichtung, wobei das Verfahren umfasst:
Modifizieren (302) einer Übersetzungstabelle (120), die auf einen ursprünglichen Funktionsnamen oder Bytecode des Interpreters verweist, um auf einen entsprechenden modifizierten Funktionsnamen oder Bytecode zu verweisen;
Bestimmen (304), dass ein von dem Interpreter auszuführendes Programm oder Skript auf den ursprünglichen Funktionsnamen oder Bytecode verweist;
Modifizieren (306) des Programms oder Skripts, um auf den entsprechenden modifizierten Funktionsnamen oder Bytecode zu verweisen;
Ausführen des modifizierten Programms oder Skripts; und
Abfangen von Aufrufen an den ursprünglichen Funktionsnamen oder Bytecode.

2. Verfahren nach Anspruch 1, wobei Bestimmen, dass das von dem Interpreter (10) auszuführende Programm oder Skript auf den Funktionsnamen oder Bytecode verweist, beim Laden des Programms oder Skripts durchgeführt wird.

3. Verfahren nach einem der vorstehenden Ansprüche, wobei Modifizieren des Programms oder Skripts umfasst:
Parsen des Programms oder Skripts, um den Funktionsnamen oder Bytecode zu orten; und
Ersetzen des Funktionsnamens oder Bytecodes innerhalb des Programms oder Skripts durch den entsprechenden modifizierten Funktionsnamen oder Bytecode.

4. Verfahren nach einem der vorstehenden Ansprüche, umfassend Bestimmen, dass der Interpreter (10) ausgeführt wird, wobei Modifizieren der Übersetzungstabelle (120) bei Bestimmen durchgeführt wird, dass der Interpreter ausgeführt wird.

5. Verfahren nach Anspruch 4, wobei Bestimmen, dass der Interpreter (10) ausgeführt wird, umfasst:
Erhalten einer Benachrichtigung von einem Betriebssystem (110), dass eine Datei mit der Absicht, ausgeführt zu werden, geöffnet wurde;
Erhalten von Merkmalen der Datei; und
Analysieren der Merkmale der Datei, um zu bestimmen, ob es sich bei der Datei um den Interpreter handelt.

6. Verfahren nach einem der Ansprüche 1-3, weiter umfassend:
Abfangen der Ausführung des Interpreters (10) durch Durchführen mindestens eines von:
Kernel-Hooking von Befehlen, die angeben, dass ein Binärbild (116) des Interpreters in den Speicher geladen und ausgeführt wird;
Erkennen von Dateizugriffsereignissen auf Dateien, die mit dem Interpreter auf der Speichervorrichtung in Zusammenhang stehen; und
Erkennen des Ladens von Bibliotheken, die mit dem Interpreter in Zusammenhang stehen, wobei Modifizieren der Übersetzungstabelle (120) beim Abfangen des Interpreters durchgeführt wird.

7. Verfahren nach einem der vorstehenden Ansprüche, wobei Modifizieren der Übersetzungstabelle (120) umfasst:
Orten der Übersetzungstabelle in dem ausführbaren Code des Interpreter-Binärbilds (116) oder des abgebildeten Binärbilds (118).

8. Verfahren nach Anspruch 7, wobei Orten der Übersetzungstabelle (120) umfasst:
Durchführen von Nachschlagen bekannter Funktionsnamen in dem Binärbild des Interpreters (116) oder in dem abgebildeten Binärbild (118);
Erhalten von Adressen, die den relativen Positionen des bekannten Funktionsnamens in dem Binärbild des Interpreters oder in dem abgebildeten Binärbild entsprechen;
Erhalten der relativen Positionen der Verweise auf die Funktionsnamen;
Sortieren der relativen Positionen;
Berechnen einer Lücke zwischen jeweils zwei aufeinanderfolgenden sortierten Positionen;
Finden eines Satzes von Positionen, der gleichmäßige Lücken aufweist; und
Bestimmen, dass die Übersetzungstabelle (120) in dem Satz von Positionen gefunden wird, der gleichmäßige Lücken aufweist.

9. Verfahren nach einem der vorstehenden Ansprüche, wobei Abfangen der Aufrufe des ursprünglichen Funktionsnamens oder Bytecodes Abbilden des ursprünglichen Funktionsnamens oder Bytecodes auf einer Abfangroutine umfasst, die zum Protokollieren des Aufrufs konfiguriert ist.

10. Verfahren nach Anspruch 9, als Reaktion auf Abfangen der Aufrufe weiter Durchführen mindestens eines der Folgenden umfassend:
Bereitstellen einer Benachrichtigung an einen Benutzer;
Beenden des Interpreters (10);
Beenden des Programms oder Skripts; und
Bereitstellen einer Benachrichtigung an einen Remoteserver.

11. Verfahren nach einem der vorstehenden Ansprüche, wobei Modifizieren einer Übersetzungstabelle zufälliges Auswählen des modifizierten Funktionsnamens oder Bytecodes umfasst.

12. Computerimplementiertes Verfahren zum Erkennen von Schadcode durch einen Interpreter (10) in einer Rechenvorrichtung, wobei das Verfahren umfasst:
Modifizieren einer Übersetzungstabelle, die auf einen ursprünglichen Funktionsnamen oder Bytecode des Interpreters verweist, um auf einen entsprechenden modifizierten Funktionsnamen oder Bytecode zu verweisen;
Bewerten (602) eines Programms oder Skripts, um zu bestimmen, ob das Programm oder Skript für Runtime-Morphing geeignet ist;
Ausführen (604) des Programms oder Skripts durch den Interpreter;
während der Ausführung Bestimmen, dass das Programm oder Skript auf den ursprünglichen Funktionsnamen oder Bytecode verweist; und
Modifizieren (608) des Programms oder Skripts, um auf den entsprechenden modifizierten Funktionsnamen oder Bytecode zu verweisen, wenn das Programm oder Skript für Runtime-Morphing geeignet ist, und ansonsten kein Modifizieren des Programms oder Skripts.

13. Verfahren nach Anspruch 12, weiter Abfangen von Aufrufen an den ursprünglichen Funktionsnamen oder Bytecode umfassend, wobei Abfangen der Aufrufe an den ursprünglichen Funktionsnamen oder Bytecode Abbilden des ursprünglichen Funktionsnamens oder Bytecodes auf einer Abfangroutine umfasst, die zum Protokollieren des Aufrufs konfiguriert ist.

14. System zum Erkennen von Schadcode durch einen Interpreter (10), wobei das System umfasst:
einen Speicher (104); und
einen Prozessor (102), der dazu konfiguriert ist, das Verfahren nach einem der vorstehenden Ansprüche durchzuführen.

15. Computerlesbares Medium, umfassend Anweisungen, die bei Ausführung auf einem Datenverarbeitungssystem das System dazu veranlassen, ein Verfahren nach einem der Ansprüche 1-13 zu implementieren.

## Revendications

1. Procédé implémenté par ordinateur pour détecter un code malveillant par un interprète (10) dans un dispositif informatique, le procédé comprenant :
la modification (302) d'une table de traduction (120) faisant référence à un nom de fonction ou un bytecode d'origine de l'interprète pour faire référence à un nom de fonction ou un bytecode modifié correspondant;
la détermination (304) du fait qu'un programme ou un script à exécuter par l'interprète fait référence au nom de fonction ou au bytecode d'origine ;
la modification (306) du programme ou du script pour faire référence au nom de fonction ou au bytecode modifié correspondant;
l'exécution du programme ou du script modifié ; et
le piégeage des appels au nom de fonction ou au bytecode d'origine.

2. Procédé selon la revendication 1, dans lequel la détermination du fait que le programme ou le script à exécuter par l'interprète (10) fait référence au nom de fonction ou au bytecode est effectuée lors du chargement du programme ou du script.

3. Procédé selon l'une quelconque des revendications précédentes, dans lequel la modification du programme ou du script comprend :
l'analyse du programme ou du script pour localiser le nom de fonction ou le bytecode ; et
le remplacement du nom de fonction ou du bytecode dans le programme ou le script par le nom de fonction ou le bytecode modifié correspondant.

4. Procédé selon l'une quelconque des revendications précédentes, comprenant la détermination du fait que l'interprète (10) est exécuté, dans lequel la modification de la table de traduction (120) est effectuée lors de la détermination du fait que l'interprète est exécuté.

5. Procédé selon la revendication 4, dans lequel la détermination du fait que l'interprète (10) est exécuté comprend :
l'obtention d'une notification d'un système d'exploitation (110) indiquant qu'un fichier a été ouvert avec l'intention d'être exécuté ;
l'obtention de caractéristiques du fichier ; et
l'analyse des caractéristiques du fichier pour déterminer si le fichier est l'interprète

6. Procédé selon l'une quelconque des revendications 1-3, comprenant en outre :
l'interception de l'exécution de l'interprète (10) en effectuant au moins l'une des opérations suivantes :
l'accrochage de noyau de commandes indiquant qu'une image binaire (116) de l'interprète est chargée en mémoire et exécutée ;
la détection d'événements d'accès aux fichiers dans les fichiers liés à l'interprète sur le dispositif de stockage ; et
la détection du chargement de bibliothèques liées à l'interprète dans lequel la modification de la table de traduction (120) est effectuée lors de l'interception de l'interprète.

7. Procédé selon l'une quelconque des revendications précédentes, dans lequel la modification de la table de traduction (120) comprend :
la localisation de la table de traduction dans le code exécutable de l'image binaire d'interprète (116) ou de l'image binaire mappée (118).

8. Procédé selon la revendication 7, dans lequel la localisation de la table de traduction (120) comprend :
la réalisation d'une recherche de noms de fonctions connus dans l'image binaire d'interprète (116) ou l'image binaire mappée (118) ;
l'obtention d'adresses correspondant à une position relative du nom de fonction connu dans l'image binaire d'interprète ou l'image binaire mappée ;
l'obtention de positions relatives des références aux noms de fonction ;
le tri des positions relatives ;
le calcul d'un écart entre chaque paire de positions triées consécutives ;
la recherche d'un ensemble de positions qui présente des écarts uniformes ; et
la détermination du fait que la table de traduction (120) se trouve dans l'ensemble de positions qui présente des écarts uniformes.

9. Procédé selon l'une quelconque des revendications précédentes, dans lequel le piégeage des appels au nom de fonction ou au bytecode d'origine comprend le mappage du nom de fonction ou du bytecode d'origine à une routine de piégeage qui est configurée pour enregistrer l'appel.

10. Procédé selon la revendication 9, comprenant en outre, en réponse au piégeage des appels, la réalisation d'au moins l'une des opérations suivantes :
la fourniture d'une notification à un utilisateur ;
l'arrêt de l'interprète (10) ;
l'arrêt du programme ou du script ; et
la fourniture d'une notification à un serveur distant.

11. Procédé selon l'une quelconque des revendications précédentes, dans lequel la modification d'une table de traduction comprend la sélection aléatoire du nom de fonction ou du bytecode modifié.

12. Procédé implémenté par ordinateur pour détecter un code malveillant par un interprète (10) dans un dispositif informatique, le procédé comprenant :
la modification d'une table de traduction faisant référence à un nom de fonction ou un bytecode d'origine de l'interprète pour faire référence à un nom de fonction ou un bytecode modifié correspondant;
l'évaluation (602) d'un programme ou d'un script pour déterminer si le programme ou le script est admissible au morphing d'exécution ;
l'exécution (604) du programme ou du script par l'interprète ;
la détermination, pendant l'exécution, du fait que le programme ou le script fait référence au nom de fonction ou au bytecode d'origine ; et
la modification (608) du programme ou du script pour faire référence au nom de fonction ou au bytecode modifié correspondant si le programme ou le script est admissible au morphing d'exécution, et la non-modification du programme ou du script autrement.

13. Procédé selon la revendication 12, comprenant en outre le piégeage des appels au nom de fonction ou au bytecode d'origine, dans lequel le piégeage des appels au nom de fonction ou au bytecode d'origine comprend le mappage du nom de fonction ou du bytecode d'origine à une routine de piégeage qui est configurée pour enregistrer l'appel.

14. Système de détection d'un code malveillant par un interprète (10), le système comprenant :
une mémoire (104) ; et
un processeur (102) configuré pour effectuer le procédé selon l'une quelconque des revendications précédentes.

15. Support lisible par ordinateur comprenant des instructions qui, lorsqu'elles sont exécutées sur un système de traitement de données, amènent le système à implémenter un procédé selon l'une quelconque des revendications 1-13.
